(19) Europäisches Patentamt / European Patent Office / Office européen des brevets

(11) **EP 4 386 668 A1**

(12) **EUROPEAN PATENT APPLICATION**

(43) Date of publication:
**19.06.2024 Bulletin 2024/25**

(21) Application number: **22213109.6**

(22) Date of filing: **13.12.2022**

(51) International Patent Classification (IPC):
**G06T 7/12** *(2017.01)* **G06T 7/181** *(2017.01)*
**G01N 1/28** *(2006.01)*

(52) Cooperative Patent Classification (CPC):
**G06T 7/12; G06T 7/181;** G06T 2207/20044;
G06T 2207/20081; G06T 2207/20084;
G06T 2207/20104; G06T 2207/30024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tecan Trading AG
8708 Männedorf (CH)**

(72) Inventors:
• VILAJ, Volfgang
  **Uetikon am See (CH)**
• STRASSEN, Simon
  **Männedorf (CH)**
• OTT, Philipp
  **Steg (CH)**

(74) Representative: **DeltaPatents B.V.
Fellenoord 370
5611 ZL Eindhoven (NL)**

(54) **METHOD FOR CLOSING INCOMPLETE AREA OF INTEREST MARKINGS AND FOR FACILITATING TISSUE TREATMENT**

(57) Some embodiments are directed to completing incomplete area of interest markings. An area of interest marking indicates an area of interest on an image of a tissue section. The method may include detecting in the image endpoints of the one or more contours, and drawing in the image a segment connecting the matching endpoints in a selected pair.

*Fig. 4*

EP 4 386 668 A1

Description

TECHNICAL FIELD

The presently disclosed subject matter relates to method for completing incomplete area of interest markings, a method for treating an area of a tissue slice, a system for completing incomplete area of interest markings, and a computer readable medium.

BACKGROUND

The international patent application WO2020131070, with title "Method of treating a sample", and included herein by reference, discloses a method of treating an isolated area of a sample with a liquid. A known method disclosed therein comprises the steps of:

- generating an isolated area of a sample by means of a first fluid reservoir, the first fluid reservoir enclosing a distal end of a second fluid reservoir, and the isolated area of the sample being sealed towards the remaining area of the sample,
- bringing the isolated area of the sample into fluid connection with the second fluid reservoir,
- dispensing a fluid from the second fluid reservoir into the first fluid reservoir, thereby generating a fluid flow on the sample at the isolated area in a first direction, and
- aspirating the fluid from the first fluid reservoir into the second fluid reservoir, thereby generating a fluid flow on the sample at the isolated area in a second direction.

For example, figure 9 of the above patent application shows a microscope image of a formalin fixed paraffin embedded (FFPE) section of a tissue. The corresponding description gives an example of treatment of the slide comprising the tissue section.

When working with the known method of treating a sample, users need to indicate where treatment needs to take place. In practice, a user, such as a pathologist, marks one or more areas as areas of interest. An operator of the known method then determines where treatment will take place, e.g., where extraction pods need to be placed. One of the roadblocks in automating this placement, is the manner in which areas of interest are indicated. The user, say a pathologist, may indicate the area with a marker pen, without accurately closing the contour. For human operators this poses little problem, but for computer placement, or computer assisted placement, it is vital that the area of interest is accurately delineated.

SUMMARY

It would be advantageous to have an improved way of closing area of interest markings, e.g., indicated by partial contours, to obtain closed contours.

For example, in an embodiment, endpoints of one or more contours may be detected in an image. The image showing the contours may then be drawn-in by drawing a segment connecting the endpoints in a selected pair of matching endpoints.

For example, an image may be segmented into tissue and area of interest markings. For example, an image may be segmented into tissue, area of interest markings, and background. The area of interest is typically encircled by a pathologist with a marker and identified by a machine learning model. After extraction of the contours of the area of interest, typically, one or more gaps are found, e.g., caused by insufficient pressure on the marker pen, or by tissue having a color close to the marker pen, furthermore, the area of interest circled by the user often does not close up.

Since no perfectly drawn contours can be guaranteed the detected partial contours need to be closed up. An alternative approach was to directly detect areas of interest from a marked tissue image, e.g., with a trained network. Such detection is of insufficient quality, however, and often requires manual intervention to repair the detected areas of interest. It turned out that detecting contours is an easier task for machine detection, e.g., using a neural network, to perform with high quality. On the other hand, it requires a subsequent algorithm to complete the contours. Some embodiments are geometric based, meaning distances and/or angles of detected contours are used to determine matching pairs which are then connected.

A method for closing incomplete area of interest markings may be used to facilitate tissue treatment. A user may be allowed to indicate the area of interest with imperfect marking, in particular not closed contours. Having an automated way to close a contour, especially a reliable one, reduces the time to complete the workflow for treating a tissue slice.

In a further aspect, the closed contour is used to plan treatment for the area. For example, a treatment plan may comprise the locations and sizes of one or more geometric shapes covering the area of interest. The geometric shapes are selected to be supported by a treatment tip.

An alternative method of chemical detachment, e.g., lysing, is disclosed in international patent application PCT/US2021/065085, included herein by reference. According to this variant, a 3D mask is printed for application on the tissue. The 3D mask could be printed separately, but advantageously is printed directly on the tissue, e.g., tissue on a second tissue slide. The mask defined barriers around the area of interest so that a detachment fluid can be directly applied to the area of interest. This option can be applied without the need to create treatment plan comprising geometric shapes.

Furthermore, systems and/or devices may be configured to complete contours, determine a treatment, and/or operate a treatment device according to the treatment plan. The initial image comprising tissue section and markings may be scanned outside the system, e.g., by an external slide scanner. In that case the image would be obtained at input. Alternatively, the physical slide may be received in which case, the slide may be imagined in the system, e.g., by a camera. The system may be configured to detachment using a 3D mask, e.g., generating a 3D design from the completed contours, and/or printing the 3D mask, and/or applying and aspirating treatment liquid to the cavity defined by the mask, e.g., the area(s) of interest. Treatment liquid may be lysing liquid.

A further aspect is a method for closing contours. A method may also determine a treatment plan or execute the plan. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1 schematically shows an example of an embodiment of a tissue treatment device,
Figure 2a schematically shows an example of an embodiment of a tissue treatment system,
Figure 2b schematically shows an example of an embodiment of a tissue treatment system,
Figure 3a schematically shows an example of an embodiment of an image processing system,
Figure 3b schematically shows an example of an embodiment of a treatment planning method,
Figure 4 schematically shows an example of an embodiment of image processing,
Figure 5a schematically shows an example of an embodiment of partial contours,
Figure 5b schematically shows an example of an embodiment of thinned partial contours,
Figure 5c schematically shows an example of an embodiment of endpoints
Figure 5d schematically shows an example of an embodiment of a completion
Figure 6a schematically shows an example of an embodiment of an image showing tissue and markings,
Figure 6b schematically shows an example of an embodiment of an image showing a tissue mask,
Figure 6c schematically shows an example of an embodiment of an image showing partial contours,
Figure 6d schematically shows an example of an embodiment of an image showing a completed contour,
Figure 6e schematically shows an example of an embodiment of an image showing an isolated area of interest,
Figure 6f schematically shows an example of an embodiment of an image showing a treatment plan superimposed on an image of tissue
Figure 7a schematically shows an example of an embodiment of an image showing a partial contour,
Figure 7b schematically shows an example of an embodiment of an image showing a completed contour,
Figure 8a schematically shows an example of an embodiment of Hit-Miss kernels for endpoint detection
Figure 8b schematically shows an example of an embodiment of Hit-Miss kernels for junction detection,
Figure 8c schematically shows an example of an embodiment of endpoints and a junction in a contour,
Figure 9a schematically shows an example of an embodiment of an image processing method,
Figure 9b schematically shows an example of an embodiment of a tissue treatment method,
Figure 10a schematically shows a computer readable medium having a writable part comprising a computer program according to an embodiment,
Figure 10b schematically shows a representation of a processor system according to an embodiment.

**Reference signs list**

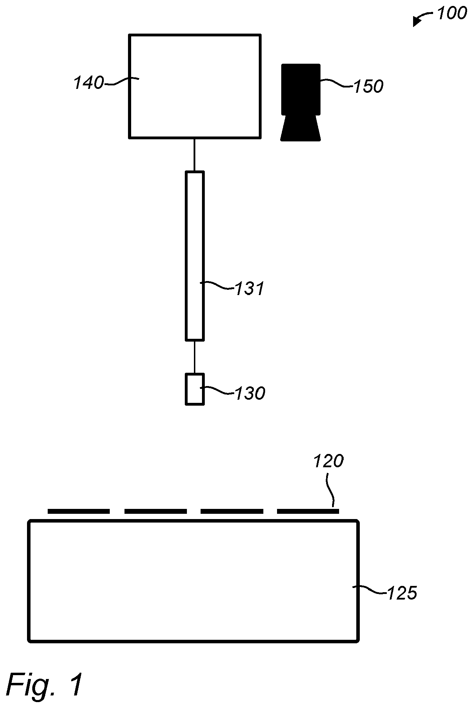

The following list of references and abbreviations corresponds to figures 1-8c, 10a, 10b, and is provided for facilitating the interpretation of the drawings and shall not be construed as limiting the claims.

| | |
|---|---|
| 100 | a tissue treatment device |
| 120 | a slide |
| 125 | a slide support |
| 130 | treatment tip |
| 131 | a treatment arm |
| 140 | a tissue treatment unit |
| 150 | a camera |
| 161 | an image with tissue section and markings, |
| 162 | a mask contour image |
| 163 | a mask tissue image |

| 164 | an isolated area of interest mask |
| 165 | a treatment plan superimposed on image 161 |
| 200, 201 | a treatment system |
| 210 | an image processing device |
| 230, 270 | a processor system |
| 240, 280 | a storage |
| 250, 290 | a communication interface |
| 260 | a tissue treatment device |
| 265 | a treatment apparatus |
| 266 | a camera |
| 300 | an image processing system |
| 310 | image preprocessing part |
| 311 | a partial contour image |
| 312 | a tissue image |
| 313 | a tissue and contours image |
| 320 | a contour completion unit |
| 322 | an endpoint detection unit |
| 324 | an endpoint matching unit |
| 330 | a treatment planning unit |
| 332 | a translation unit |
| 334 | a second matching unit |
| 340 | a treatment unit |
| 350 | an image filtering unit |
| 401-404 | an image |
| 410 | tissue |
| 420 | a partially surrounded area |
| 421-423 | a partial contour |
| 430 | a completed contour |
| 440 | a treatment plan |
| J1 | a junction |
| E1-E3 | an endpoint |

| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1** schematically shows an example of an embodiment of a tissue treatment device 100. Tissue treatment device 100 is an example of a tissue treatment device that may be used in or with an embodiment, e.g., an embodiment of an image processing method or image processing device. Tissue treatment device 100 may have image processing functionality, e.g., comprise an image processing device, or may be combined with an image processing device.

Shown in figure 1 is a slide 120. Slide 120 is arranged for a tissue section, e.g., tissue slice, to be applied to a slide surface. Parts of the tissue section are to be treated, in particular, tissue may be detached from the location. A particular important example of tissue treatment is tissue detachment. Tissue detachment may be done by lysing. For example, a lysing fluid may be applied at a location by a lysing tip, e.g., a pipetting tip, the lysed tissue may then be aspirated back. The lysed tissue can then be used for further processing, e.g., to extract biological molecules, e.g., proteins, DNA molecules, etc. For example, the tissue may be a biopsy tissue. Slide 120 is shown on top of a slide support 125. Tissue detachment may be done by scraping or by laser instead; for example, the treatment tip may comprise a scraping tip. With the lysing a localized detachment of tissue is obtained.

Treatment may include chemical treatment, e.g., chemical detachment, e.g., lysing, local staining, or other local chemical treatment. Treatment may include mechanical treatment, e.g., mechanical detachment, e.g., scraping. Treatment may include thermal treatment, UV treatment, etc.

Tissue treatment device 100 comprises a treatment arm 131 with a treatment tip 130 at an end of the treatment arm. The slide surface of slide 120 is facing the treatment tip 130. Treatment tip 130 is movable and can be configured for treatment tip 130 to move to a particular defined location on the tissue section. Typically, treatment arm 131 is motorized and arranged to be controlled by a program. The program may instruct the treatment arm 131 and tip 130 for tissue treatment at one or more locations on the tissue section. For example, treatment arm 131 may be part of a robotic arm arranged to move tip 130 to a desired location on the tissue section. For example, the treatment tip may comprise a pipetting tip, e.g., for chemical detachment of tissue. For example, a pipetting tip may be arranged for application of a fluid and/or aspiration of a fluid, e.g., for lysing the tissue at the location. A pipetting tip may be configured to enable the controlled exposure of chemicals to the tissue at the defined location. The tip may also allow dynamic fluid forces at the location to further promote tissue treatment of the tissue section at the location. For example, shear forces may be applied to the tissue through the fluid. For example, the treatment tip may be a scraper, e.g., for mechanical and localized detachment of tissue.

In an embodiment, treatment tip 130 is arranged to extract biomolecules from the tissue material, such as one or more of nucleic acids, proteins, lipids, and hormones. For example, a pipetting tip may be configured to lyse the tissue material, and to aspirate the lysate. For example, a scraping tip may be configured to scrape the tissue material. From the lysate or scraped tissue, biomolecules can be extracted, in particular, DNA molecules, more in particular double-stranded DNA molecules (dsDNA).

The location on the tissue section, e.g., a part or area or region of the tissue section, comprises the material that is to be detached, e.g., to be lysed. The location is also referred to as the area of interest (AoI). The size of the location may be determined by the size of the treatment tip 130. Often a circular shape is taken for the treatment tip 130, and for the location, but this is not necessary. For example, the location may comprise a circular area defined by the corresponding inner diameter of a tissue treatment chamber. Other shapes, say triangular, or the like is possible, and may even be advantageous if, say multiple locations are to be combined to maximize the amount of tissue detached from the tissue section. For example, the location may comprise an area whose shape is defined by the corresponding shape of a tissue treatment chamber. The location may comprise an area defined by the corresponding dimension of a scraping pipetting tip. The size of the location may be defined by a spot size or beam diameter of a laser beam used for treatment, e.g., the half-power beam width.

A tissue treatment unit 140 may be configured to move treatment tip 131 to the location on the tissue section, and to treat the tissue as appropriate, e.g., supply, and aspirate fluids to and from treatment tip 131, and/or scrape the tissue, and so on.

Further information on and examples of pipetting tips can be found, e.g., in international patent publications WO2020131072 and WO2020132394, both of which are included herein by reference.

By way of example, a small area of interest may have a surface of about 2 mm$^2$, with a dispense aperture having for example a radius of about 0.79 mm. A small area of interest may for example have a diameter of about 1 mm. A medium-sized area of interest may for example have a surface of about 10 mm2, with the dispense aperture of the pipette tip extension having for example a radius of about 1.8 mm. A medium-sized area of interest may for example have a diameter of about 4 mm.

In an exemplary embodiment, the dispense aperture at a distal end of the pipette tip extension may have a circular shape or a circular cross-section, respectively, viewed orthogonally to the medial axis of the pipette tip extension. The cross-section of the dispense aperture may however depart from a circular shape, for example may be oval, triangular or may have another form, for example a polygonal form. The shape and/or the size of the dispense aperture may for example be adapted to a specific application or use of the pipette tip extension, for example to a specific area of interest of a tissue section which shall be addressed. Exemplarily, a particularly suitable size of a dispense aperture with an essentially circular shape may have a diameter of 1.65 mm. Suitable diameters may be in the range of 0.2 mm to 7 mm, in particular in the range of 1 to 2 mm.

In an exemplary embodiment, the lysing area, e.g., the area of interest, may have a surface area size of 0.01 mm$^2$ or more, preferably, 0.1 mm$^2$ or more, more preferably 1 mm$^2$ or more. For example, the surface area size may be in a range from 0.01 mm$^2$ to 200 mm$^2$, although values above or below this range are possible. For example, the surface area size may be 8.5 mm$^2$, 12.5 mm$^2$, or 75 mm$^2$ or more, or less.

Further information on and examples of mechanical detachment tips, e.g., scraping can be found, e.g., in international patent publications WO2020254250A1, which is included herein by reference. Said publication discloses an apparatus comprising a dissection tool for mechanical detachment of biological material from a tissue sample disposed on a slide. A gouging head is configured to engage with the slide, relative movement between the platform and the dissection tool causes a front face of the gouging head to gouge a track though the tissue sample.

Returning to figure 1, by moving the pipetting tip to a location of interest and detaching the tissue at that location, some part of the tissue is obtained in unit 140 where it can be further processed. Detachment of tissue in this manner, especially automated or partially automated, is advantageous, as it is quick and reliable.

For example, tissue may be detached by one or more lysing iterations. In a lysing iteration, lysing fluid may be provided to the lysis chamber at the end of the pipetting tip, and after some time, aspirated back together with lysed material. The time the lysing fluid is in the chamber, as well as other factors, have an impact on the amount of material that is detached from the tissue slide.

A camera 150 may be included in tissue treatment device 100 to take images of the tissue section in various stages of tissue detachment. For example, an embodiment may comprise taking a first image, moving the treatment tip into position to detach tissue at the defined location. An image may also be taken before the first lysing, e.g., from a possibly stained tissue slice, possibly using different lighting, e.g., bright field. For example, camera 150 may be used to take a first image of a tissue slice, e.g., using bright field lighting, of a first tissue slice. Locations may be identified on the first tissue slice, e.g., by a user, for example, to identify at-risk tissue in the tissue slice, e.g., to identify cancer cells in the tissue slice. The markings of the user define an area of interest where the tissue is to be treated, e.g., detached, e.g., lysed or scaped. Note, that an alternative to detachment using detachment chambers, is 3D printing of a mask which places barriers around the area of interest.

The slide 120 containing the tissue slice may then be removed, e.g., motorized, and a second slide with a second slice may be moved under camera 150 and treatment tip 130. Typically, the second tissue slice is used for treatment. This tissue is typically not stained. Camera 130 may take a second image of the second tissue slice and use it to guide the treatment tip to the area of interest defined by the markings on the first slice. Using two or more tissue slices, which may be on two or more slides, allows marking and planning to use a stained tissue, while detachment may be done on an unstained tissue. However, this is not necessary, detachment could be done on the first tissue section.

Moving the treatment tip to and from the defined location may be done with a movable, e.g., motorized arm. For example, a robotic arm may be used. In an embodiment camera 150 may be used to guide arm towards the defined location, although this is not necessary. Slide 120 may comprise one or more fiducials to aid in locating the defined location in the camera image. Camera 150 and/or said fiducials may be used by guiding software configured to guide treatment arm 131 to the defined location.

In an embodiment, the treatment tip is moved parallel to tissue slide 120, creating an optical path from camera 150 to the tissue slice. In figure 1, the camera is shown above the tissue section, but this is not necessary. For example, the optical path may comprise angles, e.g., by including one or more mirrors in the optical path. This allows the camera to be located at a different position, away from the treatment unit.

In an embodiment, the treatment tip is moved orthogonal to tissue slide 120, creating an optical path from camera 150 to the defined location. For example, camera 150 may be attached to pipetting tip 130 or arm 131. By moving orthogonally away from tissue slide 120, an optical path is created for camera 150 to take an image of the tissue slice.

Combinations of parallel and/or orthogonal movement are possible, with or without using optical elements such as mirrors, optical fibers, and the like. The camera may be a conventional camera or a fiber optic camera.

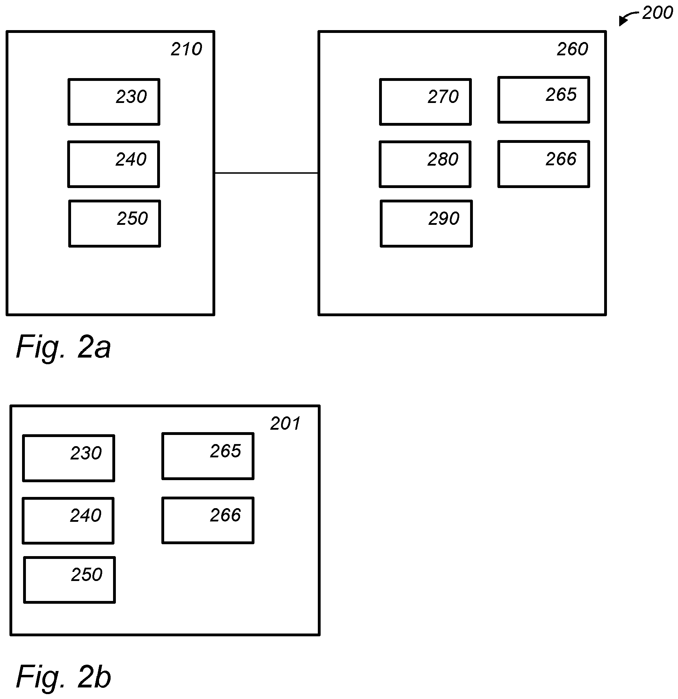

**Figure 2a** schematically shows an example of an embodiment of a treatment system 200. Treatment system 200 comprises an image processing device 210 and a treatment device 260. Treatment device 260 is configured for executing a tissue treatment at a defined location on a tissue slice. Multiple locations may be defined for a tissue slice. For example, treatment may comprise a detachment treatment. For example, detachment may be done chemically, e.g., using lysing, or mechanically, e.g., scraping.

In an embodiment, the tissue section is paraffined and/or formalin fixed. It is not necessary to restrict to FFPE tissue.

Image processing device 210 may comprise a processor system 230, a storage 240, and a communication interface 250. Treatment device 260 may comprise a processor system 270, a storage 280, and a communication interface 290. Treatment device 260 may further comprise treatment apparatus 265 and a camera 266. For example, the treatment apparatus 265 may comprise a mechanism to perform a treatment at a defined location, e.g., a lysing unit or the like. For example, camera 266 may be configured to image the tissue slice. In particular, camera 266 may be configured to image a first tissue slice having markings indicating one or more areas of interest, and a second tissue slice on which treatment is to be performed on the areas of interest indicated in the first tissue slice.

The first and second tissue slice could be the same slice, but typically, first and second tissue slice are different tissue slices, though typically from the same tissue, e.g., the slice may be neighboring slices, or even consecutive slices of a tissue.

The treatment apparatus 265 may be configured to perform the treatment operations, e.g., moving the treatment arm, and treatment at a location of the tissue section.

Storage 240 and/or 280 may comprise local storage, e.g., a local hard drive or electronic memory. Storage 240 and/or 280 may comprise non-local storage, e.g., cloud storage. In the latter case, storage 240 and/or 280 may comprise a storage interface to the non-local storage.

Image processing device 210 and/or treatment device 260 may communicate internally, with each other, with other systems, external storage, input devices, output devices, and/or one or more sensors over a computer network. The computer network may be an internet, an intranet, a LAN, a WLAN, etc. The computer network may be the Internet. The system comprises a connection interface which is arranged to communicate within the system or outside the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

For example, in an embodiment, treatment device 260 takes an image of a tissue slice. Image processing device 210 performs image processing on the image. For example, the image processing may comprise the completion of one or more partial contours in the image. For example, the user may have indicated an area of interest with contours that do not fully matchup. Such unmatched contours are problematic for treatment, as it is unclear which tissue is included and which is not. Image processing device 210 may also create a treatment plan, e.g., the plan may indicate the type of treatment which is to be applied at which location of the image.

In system 200, the communication interfaces 250 and 290 may be used to send or receive digital data. For example, treatment device 260 may send digital images representing tissue slices to image processing device 210. For example, image processing device 210 may send completed contours and/or a treatment plan to treatment device 260. The treatment plan could also be made at device 260 or could be made by a human operator of device 210 and/or 260.

The execution of system 200, image processing device 210 and/or treatment device 260 may be implemented in a processor system, e.g., one or more processor circuits, e.g., microprocessors, examples of which are shown herein. The processor system may comprise one or more GPUs and/or CPUs. System 200, and/or devices 210 and 260 may comprise multiple processors, which may be distributed over different locations. For example, system 200 may use cloud computing.

System 200, image processing device 210 and/or treatment device 260 may comprise functional units that may be functional units of the processor system. For example, these may be used as a blueprint of a possible functional organization of the processor system. The processor circuit(s) are not shown separate from the units in some of the figures. For example, the functional units shown in figures 2c may be wholly or partially implemented in computer instructions that are stored at system 200, image processing device 210 and/or treatment device 260, e.g., in an electronic memory thereof, and are executable by a microprocessor thereof. In hybrid embodiments, functional units are implemented partially in hardware, e.g., as coprocessors, e.g., image processor for analyzing digital images including a defined location, and partially in software stored and executed on system 200.

**Figure 2b** schematically shows an example of an embodiment of a treatment system 201 in which image processing device and treatment device are integrated. For example, a processor system 230, a storage 240, and a communication interface 250 may be configured to perform the tasks needed for the treatment part of system 201 in addition to the image processing tasks.

In an embodiment, a treatment device, e.g., treatment device 260, combined device 201, is configured to receive a slide having a tissue section applied on the slide surface. For example, the slide may be a glass slide, or some other appropriate material. The treatment device is further configured to perform treatment at a defined location on the tissue section, e.g., using a motorized treatment tip and imaging the tissue section(s) using a camera. The images show the defined locations, and typically also some of the surrounding tissue. The images may have a fixed perspective, e.g., obtained from a camera at a fixed location. The tissue slices may not be at a fixed position relative to the slides. The relative position of the slides to the camera may be easier fixed, but may not be entirely fixed either. Both positional variations can be resolved with image processing, e.g., registration algorithms.

For example, a treatment plan may comprise a plurality of locations, e.g., coordinates, and a corresponding plurality of parameters. For example, a parameter may be the size of the treatment tip, the intensity of the treatment, the duration of the treatment, and so on.

For example, a treatment plan may overlay the area of interest with one or more detachment shapes, corresponding to a treatment tip; in an embodiment, multiple detachment shapes are supported. A detachment shape may be circular, although this is not necessary.

For example, a packing algorithm may define multiple locations, which together detach, e.g., lyse, the tissue section, e.g., at the area of interest or a part thereof. For example, a circle packing algorithm may be used if the area at the defined location is circular. A packing algorithm improves the yield of the collected lysate. For example, a user may define an area for treatment that is larger than a single treatment area. The packing algorithm may select multiple locations in the area for treatment so that the corresponding treatment areas occupy the area for treatment. For example, the packing algorithm may perform multiple optimization iterations to improve a packing of treatment area in the area for treatment.

The locations defined for the first image can be transferred to the second image. The transferred locations can then be used to steer the treatment arm and tip.

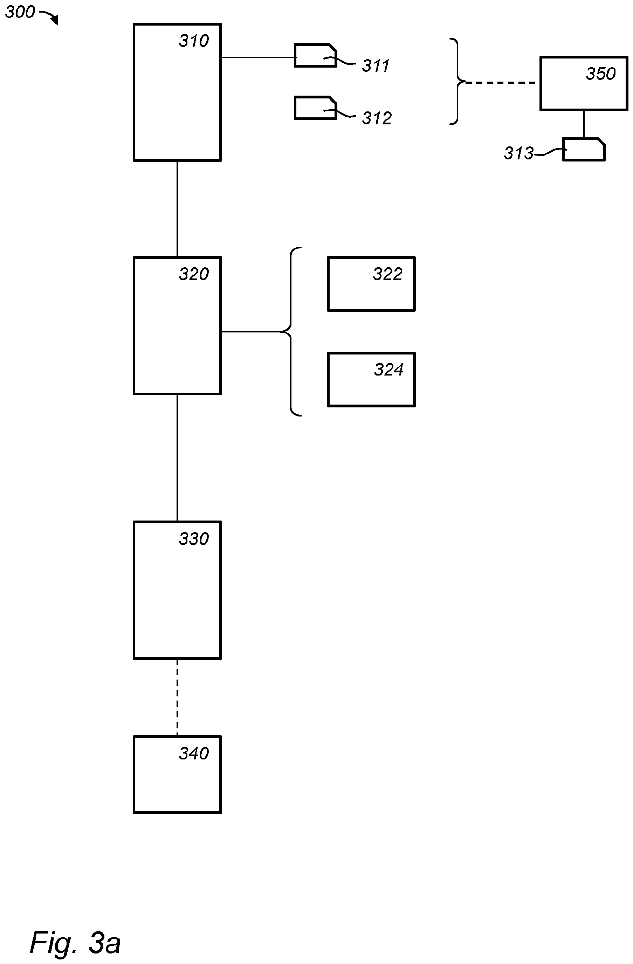

**Figure 3a** schematically shows an example of an embodiment of an image processing system 300. Image processing system 300 may be a stand-alone service, e.g., not coupled to a tissue treatment device. For example, system 300 may be implemented in a server, in the cloud, or the like, and configured to receive two or more images for alignment, and to return a transform between the images. System 300 may be implemented in a single device or distributed over multiple devices. System 300 may be combined, e.g., integrated, with a tissue treatment device. System 300 may be implemented in device 210 or 201.

System 300 is configured to obtain an image 311 comprising one or more contours. A contour in the image indicates an area of interest in the image, e.g., an area that is to be detached by a detachment device, or that is to receive another treatment. The contours at least partially surround an area of the image. Ideally, the contour would fully surround the area, but in practice it has turned out that users often omit a part of the contour. Such partial contours are a problem for subsequent algorithms, e.g., that further analyze the image at area of interest, and in particular for treatment planning algorithms.

A contour may be regarded as a curve, often with a non-uniform thickness. For example, a contour may have a thickness in the physical original of about .5-2 mm, depending, e.g., on the tip used to create the contours. For example, in an embodiment, a user will physically mark the original tissue slice with a colored marker. The pressure on the tip may cause a non-uniformity of the contour.

Preferably, image 311 only contains said contour(s), although in practice some contamination turns out to be acceptable. For example, even with some unrelated markings, parts of the tissue image, or the like, although undesirable in image 311, the algorithm still performs acceptably. Image 311 may be obtained from a user. For example, a user may draw the contours on an input device, e.g., a drawing tablet and digital pen, a mouse and display, or the like. Preferably, the contour image, comprising closed or partial contours, e.g., image 311, does not contain any pixels that belong to tissue instead of to contours. In practice, this is not strictly needed. In an embodiment, the contour image comprises less than a threshold amount of the tissue. In an embodiment, image 311 comprises less than a threshold amount of the tissue, say, less than 5%, preferably less than 1%, by pixel of the image.

Image 311 may be obtained from an image filtering unit 350. Image filtering unit 350 may be part of image process system 300, but need not be. Image filtering unit 350 may be configured to obtain an image 313 of a tissue section together with area of interest markings. The latter marking may be applied with a felt tip marker pen say. Image filtering unit 350 is configured to isolate from image 313 an image 311 with only the contours indicated by the user in image 313. Typically, image filtering unit 350 also isolates from the image 313 an image 312 with only the tissue parts.

Preferably, a tissue image, e.g., image 312, does not contain any pixels that belong to markings instead of to tissue. In practice, this is not strictly needed. In an embodiment, the tissue image comprises less than a threshold amount of the markings. In an embodiment, image 312 comprises less than a threshold amount of the tissue, say, less than 5%, preferably less than 1%, by pixel of the image.

An advantageous implementation is to make contour image 311 and/or tissue image 312 masks. A mask contour image 311 is a binary image that indicates which pixel in the original image 313 correspond to a contour. A mask tissue image 312 is a binary image that indicates which pixel in the original image 313 correspond to a tissue.

Typically image 313 is a photo.

There are several ways to obtain images 311 and/or 312 from input image 313. For example, markings may be applied using a marker with a contrasting color. The image filtering unit 350 may then isolate those parts of the image that correspond to the contrasting color. This technique is possible, but practical trials showed significant drawbacks. The tissue that is shown on image 313 can cause significant false positive, causing unintended contours. Although such false positives can be identified, eliminating them causes large parts of the contours indicated by the user to be lost. The resulting embodiment works, but needs a higher level of user supervision to avoid these problematic cases.

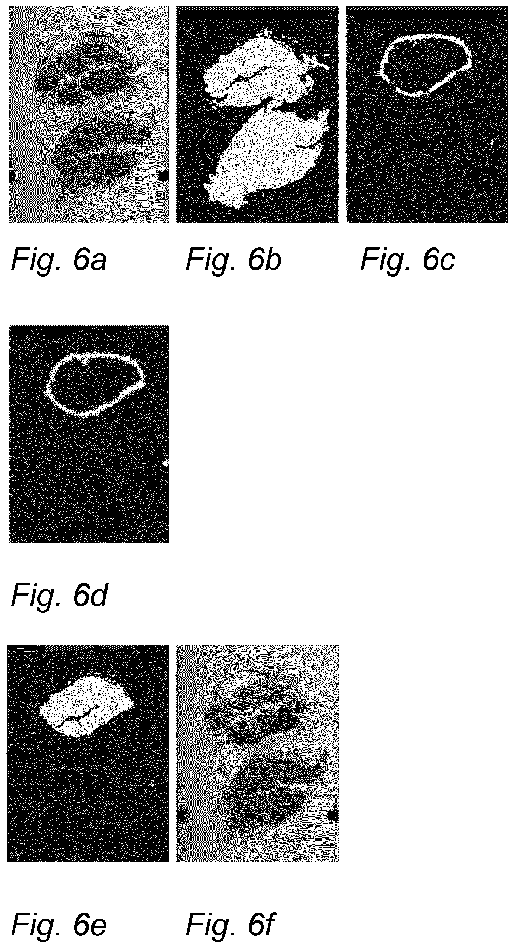

It turns out that green markings are easier to detect, although even they can sometimes barely be visible. The markings in the photos shown in grey scale, e.g., image 161 and figure 6a, are originally in green. It turns out that red and blue markers are closer to the color of the H&E staining, and thus are harder to detect. Black colors are also well detected. In an embodiment, markings are provided in green or black color. In many practical situations there is little control over which color is used in marking; fortunately, the system also works for less optimal colors.

Another way to obtain images 311 and/or 312 which is to train a machine learned model to identify these parts of an image. For this approach a deep neural network was trained on a set of training images 313 and user isolated contours and tissue images. Surprisingly, much superior quality isolation is obtained with a trained deep neural network than is possible with color-based isolation. In an embodiment, a neural network receives a color image 313 and produces a mask contour image 311. Producing a mask works well with a neural network, as only one output per pixel is needed. For example, the neural network image may be thresholded to obtain the mask image. A second neural network may be trained to produce a tissue mask image in the same manner. The first and second neural network can also be combined into a single network producing contour image and tissue image as output. The first and second neural network can also be partially combined with a common base, e.g., the initial layers, but a different head.

In an embodiment, a convolutional neural network (CNN), e.g., a Multi-Residual network (ResNet), is used for detecting the contours and/or for detecting the tissue. For example, a U-Net may be used. The neural network, e.g., the u-net, may be trained on a more general class of images, e.g., biomedical image segmentation, after which it may be finetuned on a training set to identify contours and/or tissue. An example U-net is the "U-Net: Convolutional Networks for Biomedical Image Segmentation", by O. Ronneberger and P. Fischer and T. Brox, included herein by reference.

Yet another way to obtain a contour mask, is to use different input modality. For example, a user may indicate the contours on a drawing tablet or the like. In this case, no isolation is needed, as the contours can be separated at creation.

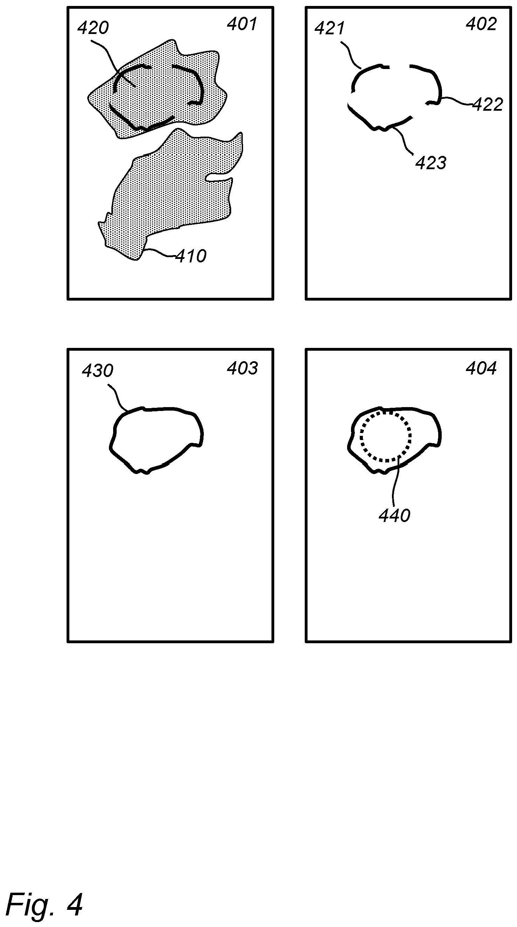

**Image 401** in **figure 4** schematically shows an example of an image, e.g., obtained from a camera applied to a tissue slide. Image 401 shows tissue 410, and a partially surrounded area 420. For example, a user, say a pathologist, want this particular part of the tissue to be detached for further analysis. **Image 402** in **figure 4** schematically shows an example of a contour image, e.g., an image of the partial contours in image 401 isolated therefrom. **Figure 6a** shows an example of an embodiment of an actual image showing a tissue section together with area of interest markings, e.g., as indicated by contours at least partially surrounding the area. The markings can be made out but are difficult to see, this is also the case in the original. A first neural network has been applied to figure 6a to obtain an image of the tissue section, which is shown in figure 6b. A second neural network has been applied to figure 6a to obtain an image of the contours, which is shown in figure 6c. A figure of the tissue is not strictly necessary, but as tissue is recognized well by the neural network, the tissue image may be used to remove unrelated markings, e.g., from a contour image (6c), etc.

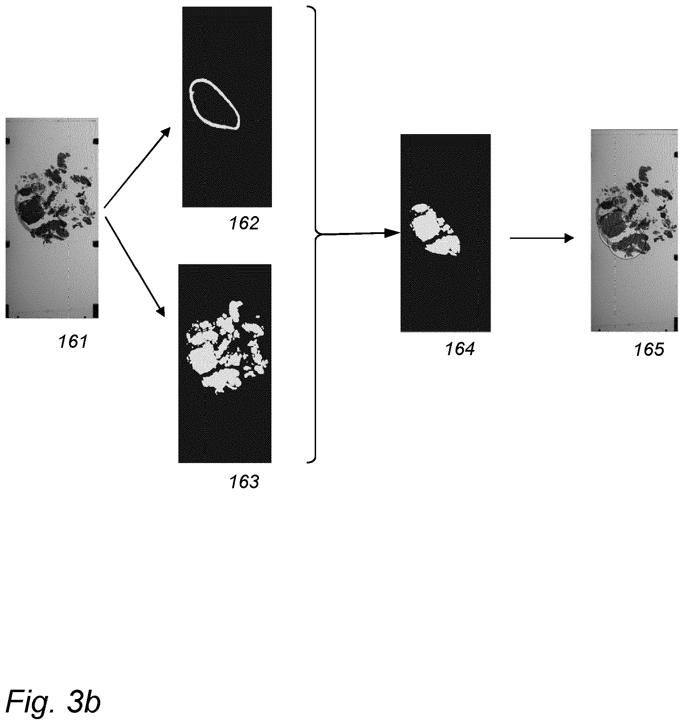

Returning to figure 3. System 300 may comprise an image preprocessing part 310 if desired. For example, preprocessing may comprise cropping, noise reduction, thresholding, and the like.

In an embodiment, a tissue image 312 is used to remove markings from the image that are applied by the user, but which are not contour markings. For example, an image of a tissue section together with area of interest markings is obtained, e.g., image 313 comprising one or more contours, e.g., markings, as well as tissue image. One or two machine learned models are applied to the image of the tissue section to obtain the image comprising the one or more contours, and an image of the tissue section. Typically, these images are masks that can be combined with the original image.

Interestingly, the neural network trained to recognize tissue will not easily confuse markings with tissue, especially if, as in an embodiment, markings are in black and/or green, as these colors proved easiest for the network to distinguish from tissue.

In an embodiment, the tissue image mask is used to remove markings that are not contours. For example, a user may write on the tissue slice information such relating to a patient, e.g., a patient number of the like, or instructions relation for a tissue treatment professional. For example, if the digit 8 is written on a tissue slide, it may be interpreted as two closed contours. It is preferred that such markings are avoided, as tissue treatment at such unintended areas will not succeed.

In an embodiment, all contours are detected, even contours that do not delineate tissue. The contours are closed as usual. Multiple closed contours may be obtained. It is then determined for each closed contour if it intersects tissue. Tissue may be detected by a tissue detection algorithms, e.g., a neural network. Typically, writing will not be confused with tissue. If a contour intersects with tissue, it is treated as an area of interest. If there is no intersection between tissue and a contour, this contour is removed. After the removing part of the contours, the masks may be transferred, e.g., to a pod placement algorithm.

In an embodiment, closed contours are filled, to obtain mask, e.g., a binary mask, indicating which parts of the tissue is to be treated.

System 300 may comprise a contour completion unit that performs the actual completion of the contours. For example, system 300 may use an endpoint detection unit 322 configured to detect the endpoints of contours. Various image processing algorithms can be used for this task. There are multiple ways to achieve this task. For example, an embodiment uses a first algorithm to detect the individual contours. The algorithm can then verify which of found contours enclose an area, and which are partial. The endpoints of the partial contours can then be obtained by an endpoints detecting algorithm applied to a contour. Many experiments were done with various approaches, with more or less success but the embodiment described herein turned out to be particularly robust and reliable.

Once endpoints have been found, system 300 may use an endpoint matching unit 324. Also here, different approaches are possible. A flexible approach turned out to apply a score to pairs of detected endpoints indicating a likelihood that the pair of endpoints correspond to the same partial contour. Such a score can take into account several factors that weight in favor or against this. For example, the score may comprise a distance term and a direction term.

For example, pairs of endpoints with favorable scores, e.g., high scores may be identified. The contour can then be completed by drawing in the image a segment connecting the two endpoints in the selected pair.

The completing can be done in various ways. In practice the straightforward completion by connecting with a straight line turned out to be fast and robust. Moreover, this approach has a high predictability for users who work with the system. Other approaches are possible. For example, in an embodiment a spline may be fitted to the contours connected to the two endpoints that are to be lined up. An advantage of this approach is that the resulting completed contour looks more natural and is closer to what the user likely intended to draw.

Yet a further option is to train a neural network to complete the contour given the endpoints. For example, consider a training set of contour images and corresponding tissue images. During training two points on the same contour may be selected and the contour between the two selected points may be deleted. The neural network is provided the partially deleted contour, the two selected points, and the tissue image. The desired output of the neural network is an image of the completed contour. An advantage of this approach is that the neural network will learn to take the underlying tissue into account, e.g., delineating a contour at an edge of tissue, while a straight line may include undesired tissue.

In an embodiment, the selected endpoints could even be omitted as an input. In this case, the neural network learns the whole task of contour completion. Neural network-based approaches to contour completion, with or without the help of endpoints at the input, at present were not entirely satisfactorily either. There is no guarantee that the neural network will actually close the contour, so that a non-neural network algorithm would still be necessary. Furthermore, a neural network suffers from low predictability or explainability for the user.

Image 403 in figure 4 schematically shows an example of an embodiment of a closed contour 430. Image 403 is obtained by processing image 402. Figure 6d schematically shows an example of an embodiment of an image showing the completed contour for figure 6c, obtained with an embodiment.

Returning to figure 3. Once all contours are closed, the contour image may be optionally further cleaned up. For example, all parts that were not identified as a contour, or that could not reliably be closed, etc. may be removed. Optionally, a user confirmation step is possible. For example, a user may confirm that the computer completed contours are correct.

For example, in an embodiment, a confidence value is determined for the completed contour, e.g., the drawn-in image, and displaying the completed contour, e.g., the drawn-in, image to a user for user confirmation if a comparison between the confidence value and a threshold value shows low confidence. For example, confidence may be determined from the score of connected endpoints. If all connected endpoints have score that indicate a high likelihood that the points belong to each other, then confidence is high. For example, confidence may be the worst, e.g., lowest, score of all pairs of connected endpoints.

In an embodiment, an optional further processing may be performed, e.g, to remove detected and possibly closed contours that do not correspond to tissue. For example, in an embodiment, an intersection is determined between an area enclosed by a contour (possibly detected as closed from the beginning or closed by the system) and the tissue in tissue image 312. If the area of the intersection is low, e.g., below a threshold, contour is removed. The area of the intersection indicates an extent of the region in the image inside the area enclosed by the contour and inside the tissue; the extent may be expressed in a squared distance unit, e.g., squared millimeters. For example, if the intersection area is less than 1 mm², then the contour may be discarded. For example, if the intersection area is less than the area that the treatment device 330 can treat, e.g., then the contour may be discarded.

The completed contour may optionally be passed on to a treatment planning unit 330. Treatment planning unit 330 may be part of system 300 or may be part of another system. Likewise, the treatment device, e.g., detachment device, may be part of system 300 or may be another system.

For example, treatment planning unit 330 may determine the intersection of the area or areas indicated by the now completed contour or contours. The intersection may then be covered with geometric shapes that correspond to detachment areas obtainable from the treatment device, e.g., detachment device. Treatment may include chemical detachment, e.g., lysing, mechanical detachment, e.g., scraping, thermal treatment, UV treatment, local staining.

Various ways of covering are possible. An acceptable result can be obtained by a so-called greedy algorithm. For example, one may try to cover as much of the area as possible with the largest available shape. Then continue placing the largest shape until no sufficient progress is made. At that point, the algorithm may switch to the next smaller shape. Many variants are possible.

The treatment plan, e.g., the covering, but possibly also including parameters associated with the shapes, e.g., intensity settings may be passed on to a treatment device 340 to perform the planned treatment. In particular, the treatment may comprise detaching the areas on the tissue slice corresponding to the planned detachment shapes in the intersection image with the motorized treatment tip. Treatment device 340 may or may not be part of system 300.

Image 404 in **figure 4** schematically shows an example of an embodiment of a treatment plan 440. In this case, a single detachment step in the form of lysing is proposed, as indicated by the dashed circle. The center of the circle indicates the location of lysing, and the radius indicates the radius of the detachment area. More than one detachment areas may be used. In this case only part of the area of interest is lysed, whether that is acceptable depends on parameters in the treatment planner. **Figure 6e** schematically shows an example of an embodiment of an image showing an isolated area of interest. **Figure 6f** schematically shows an example of an embodiment of an image showing a treatment plan superimposed on an image of tissue. In the case of figure 6f two lysings are proposed, one with a larger radius and one with a smaller radius.

Obtaining an intersection image is much easier if the contour is completed. Standard fill algorithms may be used to fill the contour which may then be intersected with the tissue image. Obtaining an intersection image, e.g., as in figure 6e is beneficial for planning but not necessary. Planning could be done directly on figure 6d instead, e.g., on the completed contour image.

In an embodiment, an intersection image is obtained from the tissue section image and closed contours. The intersection image is covered at least partially with geometric shapes corresponding to detachment areas obtainable from a motorized treatment tip arranged to treat a tissue slice, detachment areas in the intersection image corresponding to areas on the tissue slice for detaching with the motorized treatment tip. A detachment device may then detach the areas on the tissue slice corresponding to the detachment areas in the intersection image, e.g., in the treatment plan, with the motorized treatment tip. The detaching by the detaching device may comprise applying lysing chambers having the geometric shapes corresponding to detachment areas, dispensing a detaching liquid to the lysing chamber, allowing the detaching liquid to detach tissue, aspirating the detaching liquid with the detached tissue from the cavity, and forwarding the liquid for further processing. In an embodiment, a detaching liquid is dispensed and/or aspirated from a pipette tip arranged at a motorized pipettor arm, said arm being arranged to move the pipette tip to the cavity.

In an embodiment, a treatment plan is determined from a first marked tissue slice. The detaching being performed on the second tissue slice.

**Figure 3b** schematically illustrates an example of an embodiment of a treatment planning method. Shown in figure 3b is a photo taken from a tissue slice on which a user has applied markings with a pen. Although this picture is in grey scale, the original color photo shows a greenish color marking with a bluish color tissue. A first neural network was applied to image 161 to produce a contour image, in this case a mask 162. A second neural network was applied to image 161 to produce a tissue image, in this case a mask 163. In this case, it happens that the contour shown in image 162 is closed, so no closing is necessary. Image 164 shows the intersection of the area indicated by the contour in image 162 and the tissue image 163. The intersection is the area of interest, in this case, for lysing. Image 165 shows a treatment plan for the area. Shown in figure 165 are two circles that correspond to shapes of lysing tips that a treatment device can apply to the tissue.

Below several further optional refinements, details, and embodiments are illustrated.

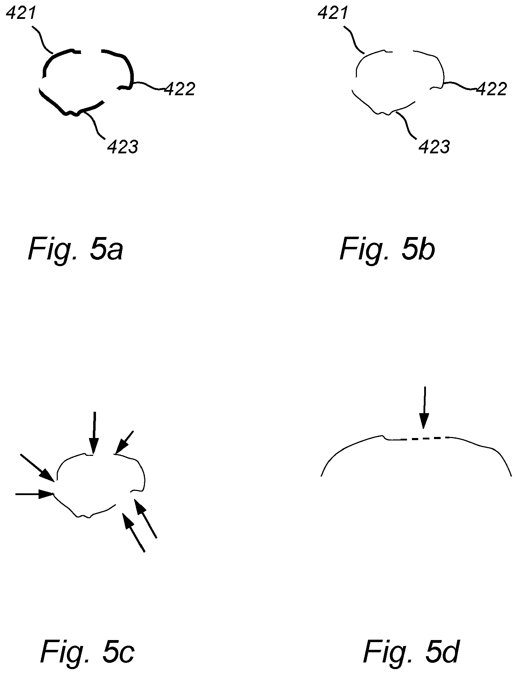

**Figure 5a** schematically shows an example of an embodiment of partial contours. For example, figure 5a may be obtained from a machine learning algorithm, e.g., a neural network.

**Figure 5b** schematically shows an example of an embodiment of thinned partial contours. In an embodiment, the contour image is skeletonizing before detecting the endpoints. Skeletonizing is sometimes referred to as thinning. For example, skeletonizing can be applied in figure 5a, image 162, and figure 6c.

It turned out to be advantageous to apply a thinning algorithm to the contours. Thinning is the removal of pixels connected to the contours to produce a skeleton with retained connectivity properties. Preferably, the contours are thinned as much as possible without introducing additional unconnected parts, e.g., without introducing new gaps in the contours. For example, a curve may be obtained that is only 1 pixel wide.

Good results were obtained with the algorithm described in the paper "Parallel Thinning with Two-Subiteration Algorithms", by Zicheng Guo and Richard W. Hall, included herein by reference. See also the paper "A Sequential Thinning Algorithm For Multi-Dimensional Binary Patterns", by Himanshu Jain, Archana Praveen Kumar, included herein by reference.

The original contours are typically much wider than a single pixel and are not of uniform thickness. This makes geometric reasoning about the contours harder that it needs to be. By skeletonizing the contours, the image is simplified considerably. In particular making it possible to use geometric method to find and connect endpoint without relying on machine learned algorithms. It was found in practice that the geometric algorithms described herein have a high robustness. Not only have they a low failure rate in general, but they have a predictable failure rate. That is, an easy image will almost always be connected correctly, while failure, if it occurs, occurs in images that a human operator would expect to be difficult. A predictable failure mode is desirable behavior, and much different than experienced with neural networks.

Skeletonizing is optional, but it was found that implementing, debugging, and fault detection was much easier on skeleton curves, e.g., 1-pixel wide curves.

In an embodiment, the contours are detected in the contour image, preferably on the thinned contour image. Various algorithms for detecting contours, e.g., edges, or curves in an image area available. To detect a contour, one may scan the image, from side to side until a contour pixel is found. The contour can then be identified by detected connected pixels. By marking or removing the detected contour, next contours can be detected until all are found. For example, the contours may be stored in a data structure, say in a list or array.

Good results were obtained with the algorithm described in the paper "Topological Structural Analysis of Digitized Binary Images by Border Following", by Suzuki, S. and Abe, K., included herein by reference.

**Figure 5c** schematically shows an example of an embodiment of endpoints detected. Having contours their endpoints can be detected. One way to do this is to use a geometric algorithm. One starts with a random point on the contour and sequentially iterates over the pixels in the contour from this starting point in either direction, until a pixel is found with is connected to only one other pixel. Moving focus from pixel to connected pixel is also referred to as walking, or traversing, over the contour, or over the curve. Endpoint detection is easier by first skeletonizing the contour image, resulting in only one-pixel wide lines.

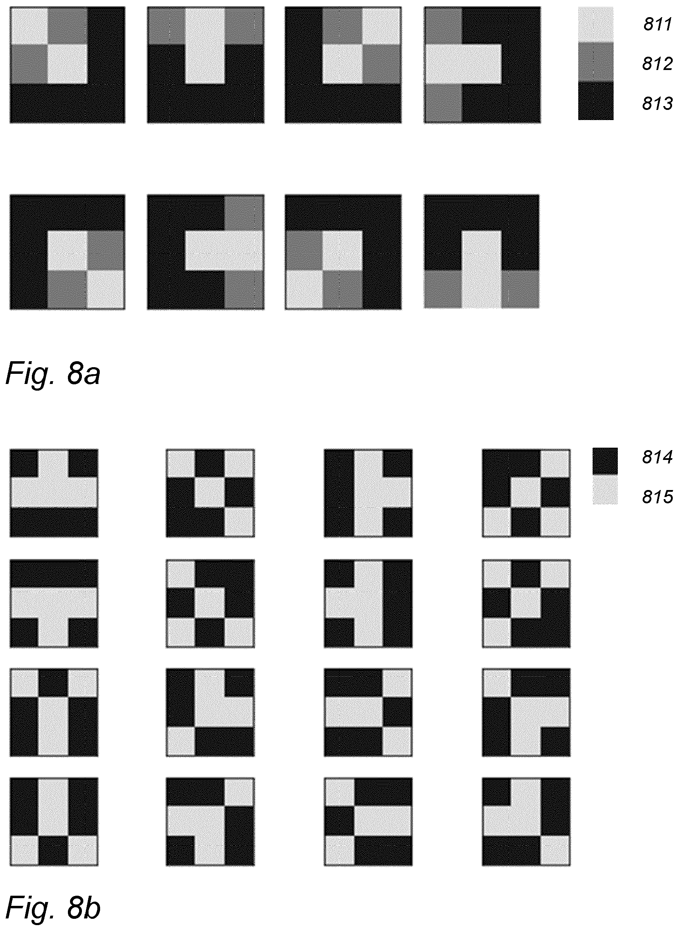

Another approach is to determine the endpoints of the contours is to perform a Hit-Miss Operations on the image using a set of kernels that represent all possible endpoints. This works well in a binary skeletonized image as the number of possible endpoints is small. **Figure 8a** schematically shows an example of an embodiment of Hit-Miss kernels for endpoint detection.

The kernels shown in figure 8a are 3x3 kernels that depicts an endpoint. A kernel of the set is compared with the contour image at each location where an end point is possible or expected, e.g., at all locations. A kernel value can be hit, e.g., 1, indicating a pixel of the contour, indifference, e.g., 0, indicating that the contour image pixel value is not taken into account, or miss, e.g., -1, indicating that contour image should have a pixel value indicating a non-contour pixel. Hit pixels are indicated with color 811, indifferent with color 812, and miss with color 813.

The Hit-Miss operation looks for patches in the image that are identical to the kernel. The kernels may be represented with the values -1, 0 and 1. The value -1 matches with a 0 pixel (a non-contour pixel) and the value 1 matches with a 1 pixel (a contour pixel). In the example shown the kernel value 0 indicates indifference of the target value, meaning it can be a 1 or a 0. This ensures additional robustness in case of errors in the skeletonized image. The kernel set shown only works with one-pixel wide lines, which may be obtained by a thinning algorithm.

The kernel set shown in figure 8a is small and therefore efficient. The set is not unique. For example, instead of 3x3 kernels, larger kernels may be used. The use of indifference pixels may be avoided and so on. Larger kernels can support more cases, e.g., non-thin lined lines.

For example, if a set of 3x3 pixels is found in a contour image, for which the binary values correspond to a kernel shown in figure 8a, then the pixel corresponding to the center of the kernel is an endpoint. Using a hit-or-miss transform is an efficient way to find endpoints and avoid geometric reasoning.

In an embodiment, endpoints of the contours are detected with a hit-or-miss transform and/or with a geometric algorithm.

In an embodiment, the approximate direction of a contour near a detected endpoint is determined. These are referred to as end-directions. This is an optional step as endpoint matching can be done on the basis of distance only, but including direction makes the process more reliable. Connecting endpoints with each other to complete contours and to surround an area of interest is preferably based on their distance and angle between their end-directions.

There are several ways to compute end-directions. For example, a line be fitted to final portion of a contour. The final portion may be obtained by walking along the contour starting at the endpoints. For example, a fixed number of points, or a fixed distance, e.g., Euclidean distance may be used for fitting. The direction of the fitted line may be taken as the end-direction.

For skeletonized contours another approach is to walk along the skeleton of our contour, starting at the endpoint moving to the nearest connect point. For example, one may start at an endpoint and look for the point which is less than two pixels away. There should only be one.

Given the coordinates of these two points, we can calculate and store the angle between them. We repeat this n times, updating the reference point at each iteration. Taking the average over these n angles yields an approximate direction of the ending part of a contour line. Note that only 8 directions are possible if the contour is fully skeletonized. This can cause a problem since atan2() cannot distinguish between some angles, e.g., between 0 and 360. This can be resolved by looking at the angles of the other iterations: if most angles are 45°/ 90° [270°/ 315°] degrees they should be 0° [360°], otherwise the average is wrong.

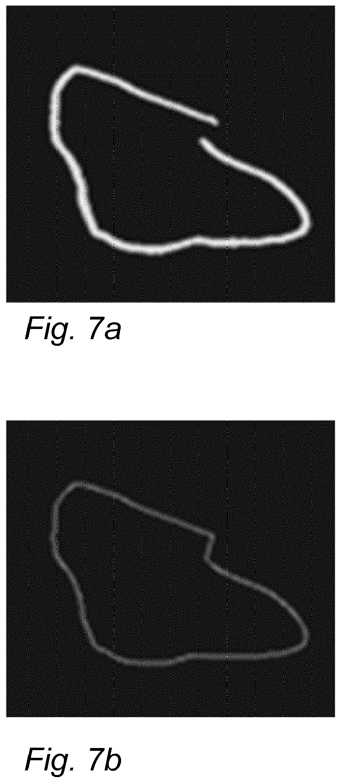

**Figure 7a** schematically shows an example of an embodiment of an image showing a partial contour. The image shown is a representation of the output of neural network that identifies contours in an image showing a tissue section and area of interest markings. The contour of figure 7a is interesting since it shows an example of poorly matching endpoints. In this case, the distance between the endpoints is a bit larger, than in some of the other examples, but on the other hand the end-direction lines up fairly well. By taking both into consideration, the algorithm correctly identifies these endpoints as matching. **Figure 7b** schematically shows an example of an embodiment of an image showing a completed contour. In this image the matching endpoints are connected with a straight line. Note that the contour in 7b is skeletonized, e.g., maximally thinned, e.g., thinned to a 1 pixel wide contour without introducing additional gaps.

An approach for matching endpoints that works well is to assign a score to a pair of endpoints that indicates how well they match. A score is typically computed for all pairs of endpoints, though computation could be limited to a promising subset of all pairs. The score indicates a likelihood that the pair of endpoints correspond to the same completed contour. That is, a user created the contour but caused gaps in the contour, e.g., because of non-uniform pressure, because of starting or finishing the contour to soon, or by temporarily lifting the pen from the paper. For most contours the correct continuation will be fairly obvious for a human observer, but an algorithm needed to automate this. Especially if multiple areas of interest are present and close together, each defined with multiple partial contours, the matching can become complicated.

In an embodiment, a score is computed for each pair of a given endpoint and all other endpoints. The given endpoint is then matched with the other endpoint that gives the best score. These two end points are then eliminated from consideration and a next given end point is selected.

The above algorithm is fast and mostly correct but may produce a local but not global optimum. Another option is to compute the score between each pair of different endpoints. This can be represented as a graph, in which vertices represent endpoints and edges are labeled with their corresponding score. This could be recorded in a diagonal matrix. The goal is now to produce a matching, e.g., a set of edges, no two of which share a common vertex. An overall score may be defined for the complete matching, say, the sum of the scores, or the worst score, say the maximum score, and so on. Such matchings can be found using any of a number of optimization algorithms, e.g., hill climbing, simulated annealing, tabu search and so on.

If the quality of a matching is defined as the sum of the scores, then this is an instance of maximum weight matching, for which efficient algorithms exists, e.g., by the paths, trees, and flowers algorithm by Jack Edmonds. See also the paper "Linear-Time Approximation for Maximum Weight Matching", by Ran Duan, and Seth Pettie.

The graph matching algorithm may be configured so that it always produces a matching, but this is not necessary. For example, an effective approach is to greedily match a pair of endpoints, for the pair with the best score, while the best score is above a threshold. In this case it may happen that not a full matching is produced, if the remaining endpoints have too low score, some endpoints may remain unmatched. This has the advantage that the algorithm explicitly refused to do hard cases, thus reducing the failure rate. In an embodiment, human corrections are stored for further training or fin.

For example, a score for a first and second endpoint may depend on the distance between the first and second endpoint, e.g., becoming worse with increasing distance, e.g., increasing with the distance between the two points.

For example, a score for a first and second endpoint may depend on the difference between the end-directions of the first and second endpoint, e.g., becoming worse with increasing difference, e.g., increasing with the difference between the endpoints. In an embodiment, the score comprises a distance term and direction term. The distance term worsens, e.g., increases, with increasing distance. The direction term worsens, e.g., increases, the closer the angle is to pi. Note that a skilled person can easily change a function, e.g., score, distance term, angle term, and the like, to increase or decrease as desired, as a connection becomes more or less likely.

For example, in an embodiment, each endpoint pair is assigned a score that rates their connection. The score may be a value in a range. For example, in an embodiment, the range is between $-\infty$ and 1. The score may be configured with a threshold so that scores above the threshold are acceptable, e.g., valid connections. For example, one may define connections with a score > 0.5 to be a valid connection. This may be implemented using normalization constants that weight the factors on which the score depends. For example, one may use constants $a$ and $b$, one for the distance and one for the angle. The constants may be determined from connections that are valid, and which are not. For example, an embodiment uses two conditions to determine the parameters: one in the direction of the end-direction (angle=0/b), and the other in the opposing direction (angle = pi/b). The parameter max_dist may be defined, e.g., 45 pixels max_dist, as the maximum distance in direction of the end-direction (angle =0/b) where a connection is still drawn; in an embodiment this is given score=0.5. The second condition is in the opposing direction (angle=pi/b). In an embodiment, the max_dist parameter is scaled with a parameter f, with 0<=f<=1, to reduce the maximum connecting distance to be smaller in the opposing direction. With the second condition one can determine b.

In an embodiment, a score is a value between $-\infty$ and 1. Score is defined as *Score* = 1 - (*dist* + *angle*). The score formulate may be configured so that reasonable connections have a score >0.5.

The parameter max_dist is chosen such that a difference in distance between two points is acceptable, even with the worst difference in end-direction. A value a is computed such that $1 - \left( \frac{max\_dist}{a} + \frac{0}{b} \right) \overset{\text{def}}{=} 0.5$
. The distance term can then be defined as

$$dist = \frac{\|p_1 - p_2\|}{a}$$
, wherein $p_1$ and $p_2$ are the two endpoints, e.g., as vectors.

For the angle part of the score a parameter value b may be computed, e.g., as $angle = \frac{\|\alpha_1 - \alpha_2\|}{b}$,
or as indicated below. The value b may be computed such that 1 - $\left( \frac{f * max\_dist}{a} + \frac{\pi}{b} \right) \overset{\text{def}}{=} 0.5$. The parameter *f* is a scaling factor, typically $0 \le f \le 1$. It scales the max_dist for points opposite to the end-direction. As example, *f* may be in the range from 0.4 to 0.6, e.g., *f* may have the exemplar value 0.5.

Note, that the above conditions may be solved for *a* and *b*, before incorporating them in software code. Also note, that scaling parameters such as *a* and/or *b* are optional.

In an embodiment, the angle may be taken as the difference between the end-direction of endpoint 1 and the angle between endpoint 1 and 2, e.g., both computed with respect to the same reference direction, say the x-axis. In an embodiment below, angle_ is the unnormalized version of the angle, e.g., angle _= angle *b. For example, one may take $angle = \frac{|\alpha\_1 - \angle(p\_1 \, p\_2)|}{b}$,
wherein $\alpha_1$ is the endpoint 1 direction, $\angle(p\_1 p\_2)$ is the angle between the endpoints.

We have that angle_=0 means that the endpoint 2 lies directly in the direction of the end-direction of endpoint 1. Therefore angle = 0 is the value, that most suggests connecting two points. On the other hand, angle_=pi, is the value, that least suggests connecting two points. An angle_=pi value means that the endpoint 2 is in the opposite direction of the end-direction of endpoint 1. This makes it less likely that a connection was intended, it does not make it impossible. For example, a serif added to the end of a contour could lead to an unlikely, but possible angle_ value. The score function is configured so that as the angle increases the score decreases.

In an embodiment, the maximal distance between two endpoints over which the endpoints are allowed to connect depends on the angle between their endpoints, e.g., the angle_ value. The maximal distance decreasing with an increasing, e.g., worsening, angle. For example, if angle = 0 connections are allowed up to max_dist, e.g., 45 pixels. For example, when angle_=pi, the endpoint 2 is in the opposite direction of the end-direction of endpoint 1, the maximum connection distance may be smaller, e.g., f*max_dist, e.g, 22.5 pixels.

In an embodiment, max_dist is between, e.g., 20 and 100 pixels, e.g., 45 pixels. Here max_dist is expressed in pixels, but could also be expressed as physical distance on the tissue slide.

The above formula produces good results, but there are many alternatives. For example, any function $f(d)$ or $f(d, a)$ that increases with distance $d$ and with angle incompatibility, e.g., the difference between $\pi$ and the angle difference may be used.

There are various ways to improve the endpoint matching. For example, in a first pass, any two points with an exceptionally good score may be connected and eliminated from further consideration. This avoids the need to take these points into consideration in the matching algorithm. An even faster variant is to determine in a first pass only the distances between endpoints, and immediately match up endpoints that are very close to each other. The end-directions are then only computed for endpoints that are left after this first pass. In an embodiment, a user may set a threshold for either variant.

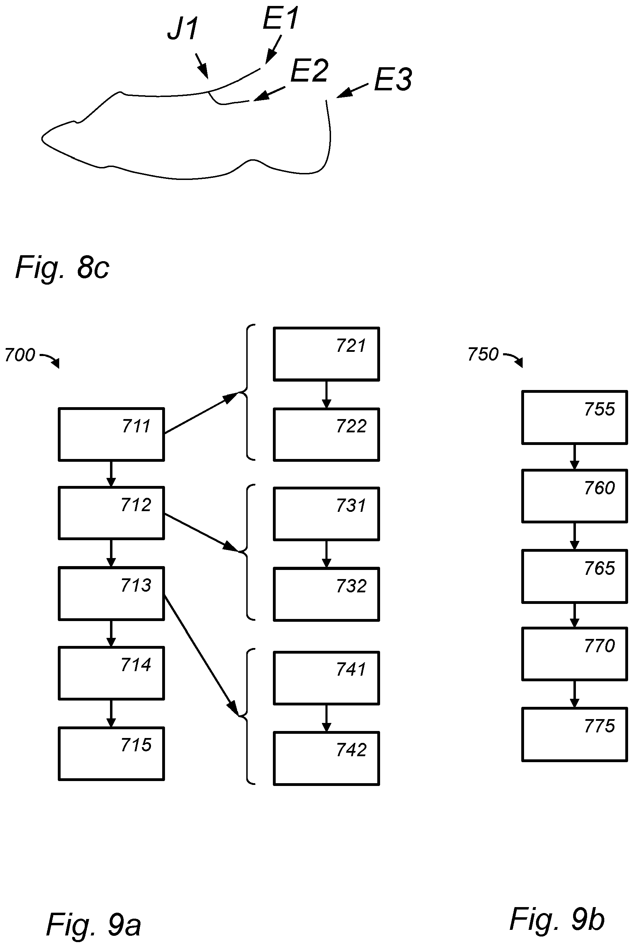

There is one more improvement, that further increased the reliability of the algorithm. In practice, it can happen that a contour is not only broken up but also split up. We refer to these points as junctions. **Figure 8c** schematically shows an example of an embodiment of endpoints and a junction in a contour. Shown in figure 8c, are three endpoints, E1, E2, and E3, and one junction. For example, an embodiment could detect something is amiss if there are an odd number of endpoints. In practice junctions occur typically close to the end of a user's marking. For example, if a user temporally lifts his/her pen from the tissue slide, but immediately returns the pen to the slide, a junction may be created.

In an embodiment, endpoints can be matched to contours, by walking from the endpoint along the contour and determining which other endpoints are found in this way. As an optimization, in this way, one may eliminate contours that are already closed, if they have no endpoints. A possible result may be a list of contours; each contour in the list being associated with a list of endpoints. If the number of endpoints is 0 or 1, the contour is already closed. If the number of endpoints is 2, then these endpoints are candidates for matching. In unfortunate situations, the number of endpoints may be larger than 2. Such situations can be left to the human operator, or may be handled by detecting junctions. Junction detection may also be used to clean up contours having 1 endpoint.

Junctions, e.g., bifurcations of the contours indicate the possibility of two endpoints being within close distance of each other, although belonging to the same lose end in the original contour. For example, in figure 8c, the algorithm may erroneously match up endpoint E1 and E2 based on their close distance.

Like endpoints also junctions can be detected by a geometric algorithm, e.g., walking a contour and finding pixels where the contour extends in more than two directions. Like for endpoints, another, and preferred option is to use another Hit-or-Miss transform. **Figure 8b** schematically shows an example of an embodiment of Hit-Miss kernels for junction detection. Color 815 is 1 (contour pixel) and color 814 is 0, (non-contour pixel). The junctions are used to find bifurcations in the skeletonized contour to eliminate endpoints that do not need matching, e.g., that do not need to be connected to another endpoint. In this example, kernels are used that only have hit or miss values, though indifference values could also have been used. The shown kernel is determined for skeleton curves, but other kernels can be devised.

In an embodiment, junction points where a contour bifurcates are detected. The junction point is then used to remove one of the endpoints from the contour. For example, in an embodiment, the distance from the junction point to the endpoints on the same contour are computed by walking along the curve. Distance may be coordinate distance but preferably, distance is computed along the curve.

In an embodiment, the endpoint nearest to the junction is removed. Applying this in figure 8c, would work as follows. First junction J1 is identified, e.g., using a hit or miss transform, or by geometric reasoning. Then the curve is walked in all directions starting at the junction. This produces the endpoints E1, E2, and E3. It turns out that endpoint E2 is the closest, so this endpoint is removed. As a result, J1 is no longer a junction. Points E1 and E3 will now correctly match up.

It is sufficient to remove one or more endpoints from consideration, e.g., from consideration as possible sites where a contour could be closed up. It is possible to also remove the contour between the junction and the removed endpoint, but this is not needed. For example, in an embodiment, a function is configured to detect endpoints and junctions, e.g., a function checkEndpoints(). The function may be configured to build a list of endpoints. Unneeded endpoints due to the presence of junctions may be removed from the list, without altering the contour itself.

As a variant, all but the furthest endpoint can be removed. In this variant, both E2 and E3 would be removed, and J1 would be the new endpoint. In this variant, E3 would match up with J1. This variant is slightly less robust, though in practice the two variants usually produce almost identical results for junctions close to the end, which is the most common situation.

Yet another variant is to restrict deletion only to endpoint near the junction. For example, after detecting the endpoints and junctions we can iterate through all junctions and delete all endpoints within a distance d thereof, or all endpoint within a distance d on the same contour. To make sure we only delete endpoints that are connected to the junction within d pixels, we walk d steps from the current junction towards each endpoint. If we reach an endpoint, we delete it. If two or more junctions are within reach, we delete all of them and substitute them with the junction.

In a variant, if a junction becomes end endpoint, no end-direction is assigned to this new endpoint. Instead, a default value for the angle term in the score function is then used. Instead of a default value the average direction from the deleted branches may be used.

**Figure 5d** schematically shows an example of an embodiment of a completion. Once two endpoints are matched up, e.g., based on the score, a segment may be drawn in the contour image connecting the two endpoints in the selected pair. This can be a straight line, a quadratic or cubic interpolation, a spline, and the like. In practice, a straight line is preferred, for its simplicity, and predictability.

In an embodiment, however, a user is presented with a proposed completion of the partial contours. In the user interface, completions are shown in a different color than the detected contours. An optional enhancement is to allow a user to change completion style for a particular connection, e.g., from linear to spline. For the majority of completions the default will be sufficient, sometimes, say, a spline will allow a better completion.

For example, in an embodiment a neural network detects the AOI markings of a pathologist in an image. Optionally, a convolutional neural network detects the tissue section shown in the image. An input image may be segmented into tissue, contours, and background. The detected markings may be thinned, and endpoints detected. A score table may be created which is dependent on the endpoint direction and distance between endpoints. Endpoints are connected when the score is high. A high score means the endpoints are close together and point in a converging direction. The completed area of interest contour may be filled, so that mask is obtained to isolate the area of interest from the tissue image. An automated placement algorithm may cover the area of interest with geometric shapes corresponding to detachment possibilities. Advantageously, an operator of the treatment device does not have to digitally define what is the area of interest. This saves significant time. Moreover, treatment is done more accurately according to the wishes of the marking user, say a pathologist.

**Figure 9a** schematically shows computer-implemented methods (700) for completing incomplete area of interest markings, an area of interest marking indicating an area of interest on an image of a tissue section. Method 700 comprises

- obtaining (711) an image comprising one or more contours, a contour in the image at least partially surrounding an area of the image, at least one of the one or more contours being a partial contour which does not fully enclose an area.

This may be implemented as follows:

- obtaining (721) an image of a tissue section together with area of interest markings,
- obtaining (722) an image comprising one or more contours, by applying a machine learned model to the image of the tissue section to obtain the image comprising the one or more contours, a contour in the image at least partially surrounding an area of the image, at least one of the one or more contours being a partial contour which does not fully enclose an area.

Method 700 comprises

- detecting (712) in the image endpoints of the one or more contours,

This may be implemented as follows:

- skeletonizing (731) the image before detecting the endpoints.
- computing (732) a hit-or-miss transform with a set of kernels over the image to detect endpoints, and/or

Method 700 comprises

- applying (713) a score to pairs of detected endpoints indicating a likelihood that the pair of endpoints correspond to the same partial contour,

This may be implemented as follows:

- determining (741) a distance between a pair of endpoints
- determining (742) an end-direction for the endpoints in the pair, and determining a difference between said end-direction
- applying a score function to the distance, and the end-directions of the endpoints.

Method 700 comprises

- selecting (714) using the score a pair of endpoints corresponding to the same partial contour, and
- drawing (715) in the image a segment connecting the two endpoints in the selected pair.

Various improvements or alternatives may be incorporated in method 700 or may replace steps. For example, method 700 may detect junctions, and clean up contours to remove junctions. For example, method 700 could ensure that each partial contour has exactly 2 endpoints. Instead of hit-or-miss transforms to detect endpoints and/or junctions other transforms are possible, e.g., convolutions. Instead of transformation geometric algorithms may be used to detect endpoints and/or junctions.

**Figure 9b** schematically shows a method 750 for determining a treatment plan, and optionally executing the treatment plan, tissue detaching. Method 750 comprises

- obtaining (755) an image comprising a tissue section and an image comprising one or more contours, a contour at least partially surrounding an area of the image comprising the tissue section, at least one of the one or more contours being a partial contour which does not fully enclose an area,
- closing (760) the contours in the contour image using a method according to any one of the preceding claims,
- computing (765) an intersection image from the tissue section image and closed contours in the drawn-in image,
- covering (770) the intersection with geometric shapes corresponding to detachment areas obtainable from a motorized treatment tip arranged to treat a tissue slice, detachment areas in the intersection image corresponding to areas on the tissue slice for detaching with the motorized treatment tip,
- detaching (775) the detachment areas according to the covering, using a motorized treatment tip.

Many different ways of executing the method are possible, as will be apparent to a person skilled in the art. For example, the order of the steps can be performed in the shown order, but the order of the steps can be varied, or some steps may be executed in parallel. Moreover, in between steps other method steps may be inserted. The inserted steps may represent refinements of the method such as described herein or may be unrelated to the method. For example, some steps may be executed, at least partially, in parallel. Moreover, a given step may not have finished completely before a next step is started.

Embodiments of the method may be executed using software, which comprises instructions for causing a processor system to perform method 700 or 750. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

Below a non-limiting list of examples is included, exemplifying the technology disclosed herein.

Example 1. A computer-implemented method for completing incomplete area of interest markings, an area of interest marking indicating an area of interest on an image of a tissue section, the method comprising

- obtaining an image comprising one or more contours, a contour in the image at least partially surrounding an area of the image, at least one of the one or more contours being a partial contour which does not fully enclose an area,
- detecting in the image endpoints of the one or more contours,
- applying a score to pairs of detected endpoints indicating a likelihood that the pair of endpoints correspond to the same partial contour,
- selecting using the score a pair of endpoints corresponding to the same partial contour, and
- drawing in the image a segment connecting the two endpoints in the selected pair.

Example 2. A method as in Example 1, comprising

- determining for an endpoint a direction of the corresponding contour at the endpoint, the score for a pair of endpoints depending on a difference between the directions of the endpoints in the pair.

Example 2.1. A method as in Example 2, comprising wherein determining a direction comprises

- traversing from the endpoint over the contour, determining a direction between subsequent pixels on the contour, and averaging the directions.

Example 3. A method as in any one of the preceding examples, wherein the score comprises a distance term and direction term.

Example 4. A method as in any one of the preceding examples, wherein obtaining the image comprising one or more contours, comprises

- obtaining an image of a tissue section together with area of interest markings,
- applying a machine learned model to the image of the tissue section to obtain the image comprising the one or more contours.

Example 5. A method as in any one of the preceding examples, comprising skeletonizing the image before detecting the endpoints.

Example 6. A method as in any one of the preceding examples, comprising

- detecting in the image junctions where a contour bifurcates, and
- removal of one or more endpoints of a contour corresponding to a detected junction to eliminate the bifurcation.

Example 7. A method as in Example 6, comprising

- traversing a contour from a detected junction to determine an endpoint of the contour connected to the junction through the contour,
- removing from the contour a segment between the junction and a closest detected endpoint.

Example 8. A method as in any one of the preceding examples, comprising

- computing a hit-or-miss transform with a set of kernels over the image to detect endpoints, and/or
- computing a hit-or-miss transform with a set of kernels over the image to detect junctions.

Example 9. A method as in any one of the preceding examples, wherein detected endpoints closer than a threshold are closed and removed from consideration before selecting a pair of endpoints using the score.

Example 10. A method as in any one of the preceding examples, comprising determining a confidence value for the drawn-in image and displaying the drawn-in image to a user for user confirmation if a comparison between the confidence value and a threshold value shows low confidence.

Example 11. A method as in any one of the preceding examples, comprising generating a 3D design for a 3D printed mask from the closed contours, for application on the tissue, the mask comprising barriers that define a cavity surrounding an area of interest on the tissue section, the cavity being open at a side facing the area of interest on the tissue section.

Example 11.1. A method as in Example 11, comprising

- printing a 3D printed mask according to the 3D design on top of the tissue section, or
- applying a 3D printed mask according to the 3D design on top of the tissue section.

Example 11.2. A method as in Example 11.1, comprising

- dispensing a detaching liquid to the cavity, and allowing the detaching liquid to detach tissue at the area of interest,
- aspirating the detaching liquid with the detached tissue from the cavity, and forwarding the liquid for further processing.

Example 11.3. A method as in any one of Examples 11-11.2, wherein the detaching liquid is dispensed and/or aspirated from a pipette tip arranged at a motorized pipettor arm, said arm being arranged to move the pipette tip to the cavity.

Example 11.4. A method as in any one of Examples 11-11.3, wherein multiple cavities are defined by one or more 3D printed masks applied on the tissue section, detaching liquid being dispensed to the multiple cavities, the detaching in the multiple cavities progressing in parallel.

Example 12. A method as in any one of the preceding examples, comprising

- obtaining an image comprising a tissue section
- computing an intersection image from the tissue section image and closed contours in the drawn-in image, and
- covering the intersection with geometric shapes corresponding to detachment areas obtainable from a motorized treatment tip arranged to treat a tissue slice, detachment areas in the intersection image corresponding to areas on the tissue slice for detaching with the motorized treatment tip

Example 13. A method as in Example 12, further comprising detaching the areas on the tissue slice corresponding to the detachment areas in the intersection image with the motorized treatment tip.

Example 13.1. A method as in Example 12 or 13 wherein detaching in a detachment area comprises applying lysing chambers having the geometric shapes corresponding to detachment areas, dispensing a detaching liquid to the lysing chamber, allowing the detaching liquid to detach tissue, aspirating the detaching liquid with the detached tissue from the cavity, and forwarding the liquid for further processing.

Example 13.2. A method as in any one of Examples 12-13.1, wherein the detaching liquid is dispensed and/or aspirated from a pipette tip arranged at a motorized pipettor arm, said arm being arranged to move the pipette tip to the cavity

Example 13.3. A method as in any one of Examples 12-13.2 for tissue treatment, the method comprising

- receiving a first tissue slice and a second tissue slice, the first tissue slice being marked,
- imaging the first tissue slice and the second tissue slice, obtaining an image showing area of interest markings and a tissue section, the detaching being performed on the second tissue slice.

Example 14. A system for completing incomplete area of interest markings, an area of interest marking indicating an area of interest on an image of a tissue section, comprising: one or more processors; and one or more storage devices storing instructions that, when executed by the one or more processors, cause the one or more processors to perform operations for

- obtaining an image comprising one or more contours, a contour in the image at least partially surrounding an area of the image, at least one of the one or more contours being a partial contour which does not fully enclose the area,
- detecting in the image endpoints of the one or more contours,
- applying a score to pairs of detected endpoints indicating a likelihood that the pair of endpoints correspond to the same partial contour,
- selecting using the score a pair of endpoints corresponding to the same partial contour, and

- drawing in the image a segment connecting the two endpoints in the selected pair.

Example 15. A system as in Example 14 comprising a motorized treatment tip arranged to treat a tissue slice, the operations including

- obtaining an image comprising a tissue section
- computing an intersection image from the tissue section image and closed contours in the drawn-in image,
- covering the intersection with geometric shapes corresponding to detachment areas obtainable from the motorized treatment tip, detachment area in the intersection image corresponding to areas on the tissue slice for detaching with the motorized treatment tip,
- detaching the areas on the tissue slice corresponding to the detachment areas in the intersection image with the motorized treatment tip.

Example 16 A transitory or non-transitory computer readable medium (1000) comprising data (1020) representing instructions, which when executed by a processor system, cause the processor system to perform the method according to any one of examples 1-13.3.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

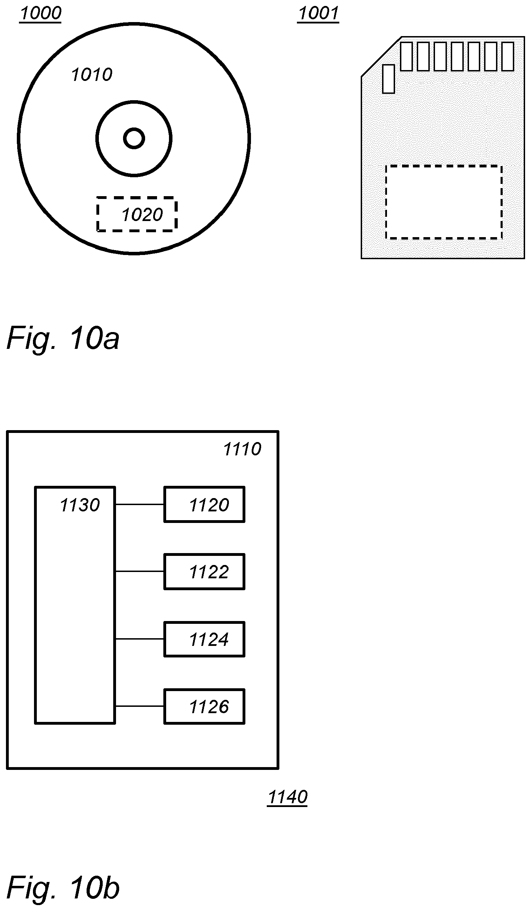

**Figure 10a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of closing a contour, determining a treatment plan, and/or executing a treatment plan, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of closing a contour, determining a treatment plan, and/or executing a treatment plan.

**Figure 10b** shows in a schematic representation of a processor system 1140 according to an embodiment of a system for closing a contour, determining a treatment plan, and/or executing a treatment plan. The processor system comprises one or more integrated circuits 1110. The architecture of the one or more integrated circuits 1110 is schematically shown in Figure 10b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors, or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contactless communication, using an antenna and/or connectors, respectively.

For example, in an embodiment, processor system 1140, e.g., the system for closing a contour, determining a treatment plan, and/or executing a treatment plan device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computer-implemented method (700) for completing incomplete area of interest markings, an area of interest marking indicating an area of interest on an image of a tissue section, the method comprising

   - obtaining (711) an image comprising one or more contours, a contour in the image at least partially surrounding an area of the image, at least one of the one or more contours being a partial contour which does not fully enclose an area,
   - detecting (712) in the image endpoints of the one or more contours,
   - applying (713) a score to pairs of detected endpoints indicating a likelihood that the pair of endpoints correspond to the same partial contour,
   - selecting (714) using the score a pair of endpoints corresponding to the same partial contour, and
   - drawing (715) in the image a segment connecting the two endpoints in the selected pair.

2. A method as in Claim 1, comprising

   - determining for an endpoint a direction of the corresponding contour at the endpoint, the score for a pair of endpoints depending on a difference between the directions of the endpoints in the pair.

3. A method as in any one of the preceding claims, wherein the score comprises a distance term and direction term.

4. A method as in any one of the preceding claims, wherein obtaining the image comprising one or more contours, comprises

   - obtaining an image of a tissue section together with area of interest markings,
   - applying a machine learned model to the image of the tissue section to obtain the image comprising the one or more contours.

5. A method as in any one of the preceding claims, comprising skeletonizing the image before detecting the endpoints.

6. A method as in any one of the preceding claims, comprising

   - detecting in the image junctions where a contour bifurcates, and
   - removal of one or more endpoints of a contour corresponding to a detected junction to eliminate the bifurcation.

7. A method as in Claim 6, comprising

   - traversing a contour from a detected junction to determine an endpoint of the contour connected to the junction through the contour,
   - removing from consideration a closest determined endpoint.

8. A method as in any one of the preceding claims, comprising

   - computing a hit-or-miss transform with a set of kernels over the image to detect endpoints, and/or
   - computing a hit-or-miss transform with a set of kernels over the image to detect junctions.

9. A method as in any one of the preceding claims, wherein detected endpoints closer than a threshold are connected and removed from consideration before selecting a pair of endpoints using the score.

10. A method as in any one of the preceding claims, wherein one or more drawn segments connecting endpoints of a partial contour, close the contour, thus fully enclosing an area.

11. A method as in any one of the preceding claims, comprising

    - obtaining an image of a tissue section together with area of interest markings,

- applying a machine learned model to the image of the tissue section to obtain a tissue image comprising the tissue,
- determining for a contour enclosing an area an intersection between the enclosed area and the tissue in the tissue image, and removing the contour if an area of the intersection is below a threshold.

12. A method as in any one of the preceding claims, comprising determining a confidence value for the drawn-in image and displaying the drawn-in image to a user for user confirmation if a comparison between the confidence value and a threshold value shows low confidence.

13. A method as in any one of the preceding claims, comprising generating a 3D design for a 3D printed mask from the closed contours, for application on the tissue, the mask comprising barriers that define a cavity surrounding an area of interest on the tissue section, the cavity being open at a side facing the area of interest on the tissue section.

14. A method as in any one of the preceding claims, comprising

- obtaining an image comprising a tissue section
- computing an intersection image from the tissue section image and closed contours in the drawn-in image, and

- covering the intersection with geometric shapes corresponding to detachment areas obtainable from a motorized treatment tip arranged to treat a tissue slice, detachment areas in the intersection image corresponding to areas on the tissue slice for detaching with the motorized treatment tip

15. A method as in claim 14, further comprising detaching the areas on the tissue slice corresponding to the detachment areas in the intersection image with the motorized treatment tip.

16. A system for completing incomplete area of interest markings, an area of interest marking indicating an area of interest on an image of a tissue section, comprising: one or more processors; and one or more storage devices storing instructions that, when executed by the one or more processors, cause the one or more processors to perform operations for

- obtaining an image comprising one or more contours, a contour in the image at least partially surrounding an area of the image, at least one of the one or more contours being a partial contour which does not fully enclose the area,

- detecting in the image endpoints of the one or more contours,
- applying a score to pairs of detected endpoints indicating a likelihood that the pair of endpoints correspond to the same partial contour,
- selecting using the score a pair of endpoints corresponding to the same partial contour, and
- drawing in the image a segment connecting the two endpoints in the selected pair.

17. A system as in Claim 16 comprising a motorized treatment tip arranged to treat a tissue slice, the operations including

- obtaining an image comprising a tissue section
- computing an intersection image from the tissue section image and closed contours in the drawn-in image,
- covering the intersection with geometric shapes corresponding to detachment areas obtainable from the motorized treatment tip, detachment area in the intersection image corresponding to areas on the tissue slice for detaching with the motorized treatment tip,
- detaching the areas on the tissue slice corresponding to the detachment areas in the intersection image with the motorized treatment tip.

18. A transitory or non-transitory computer readable medium (1000) comprising data (1020) representing instructions, which when executed by a processor system, cause the processor system to perform the method according to any one of Claims 1-15.

Fig. 1

Fig. 2a

Fig. 2b

*Fig. 3a*

161

162

163

164

165

*Fig. 3b*

*Fig. 4*

*Fig. 5a*

*Fig. 5b*

*Fig. 5c*

*Fig. 5d*

Fig. 6a      Fig. 6b      Fig. 6c

Fig. 6d

Fig. 6e      Fig. 6f

Fig. 7a

Fig. 7b

811
812
813

Fig. 8a

814
815

Fig. 8b

J1    E1

E2    E3

Fig. 8c

700

711

721

722

712

731

732

713

714

741

715

742

750

755

760

765

770

775

Fig. 9a

Fig. 9b

1000

1001

1010

1020

Fig. 10a

1110

1130

1120

1122

1124

1126

1140

Fig. 10b

Europäisches
Patentamt

European
Patent Office

Office européen
des brevets

# EUROPEAN SEARCH REPORT

Application Number

EP 22 21 3109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | EP 2 437 483 A2 (OLYMPUS CORP [JP])<br>4 April 2012 (2012-04-04)<br>* abstract *<br>* paragraph [0005] *<br>* paragraph [0012] *<br>* paragraph [0043] – paragraph [0062];<br>figures 6-11 *<br>* paragraph [0078] – paragraph [0081];<br>figure 17 * | 1-13,16,<br>18<br><br>14,15,17 | INV.<br>G06T7/12<br>G06T7/181<br>G01N1/28 |
| A | ZIZHAO ZHANG ET AL: "Recent Advances in the Applications of Convolutional Neural Networks to Medical Image Contour Detection",<br>ARXIV.ORG, CORNELL UNIVERSITY LIBRARY, 201 OLIN LIBRARY CORNELL UNIVERSITY ITHACA, NY 14853,<br>24 August 2017 (2017-08-24), XP080954331,<br>* abstract; figure 1 *<br>* Section 6.;<br>page 30 – page 32 * | 4 | |
| A | "Image geometry and morphological filters ED – Arthur R Weeks",<br>1 January 1996 (1996-01-01), FUNDAMENTALS OF ELECTRONIC IMAGE PROCESSING, SPIE OPTICAL ENGINEERING PRESS, PAGE(S) 294 – 386, XP008173653,<br>ISBN: 978-0-7803-3410-6<br>* Sections 7.4, 7.5;<br>page 333 – page 359; figure 7.51 * | 5,8 | **TECHNICAL FIELDS SEARCHED (IPC)**<br>G06T<br>G01N |

-/--

The present search report has been drawn up for all claims

| Place of search | Date of completion of the search | Examiner |
|---|---|---|
| Munich | 11 May 2023 | Salvador, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 22 21 3109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PETER BANDI ET AL: "Comparison of different methods for tissue segmentation in histopathological whole-slide images", 2017 IEEE 14TH INTERNATIONAL SYMPOSIUM ON BIOMEDICAL IMAGING (ISBI) IEEE PISCATAWAY, NJ, USA, 1 April 2017 (2017-04-01), pages 591-595, XP055606693, DOI: 10.1109/ISBI.2017.7950590 ISBN: 978-1-5090-1172-8 * abstract; figure 2 * ----- | 11,14, 15,17 | |
| Y | US 2018/128714 A1 (ADEY NILS B [US] ET AL) 10 May 2018 (2018-05-10) * abstract * * figures 25,28,32,42,43 * * paragraph [0081] * * paragraph [0100] – paragraph [0104] * * paragraph [0108] – paragraph [0113] * * paragraph [0171] – paragraph [0175] * ----- | 14,15,17 | |
| A | EP 0 977 151 A2 (CANON KK [JP]) 2 February 2000 (2000-02-02) * abstract * * paragraph [0018] – paragraph [0043] * ----- | 1-18 | TECHNICAL FIELDS SEARCHED (IPC) |

The present search report has been drawn up for all claims

| Place of search | Date of completion of the search | Examiner |
|---|---|---|
| Munich | 11 May 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3109

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2023

| Patent document cited in search report | | Publication date | Patent family member(s) | | Publication date |
|---|---|---|---|---|---|
| EP 2437483 | A2 | 04-04-2012 | CN | 102446349 A | 09-05-2012 |
| | | | EP | 2437483 A2 | 04-04-2012 |
| | | | JP | 5658963 B2 | 28-01-2015 |
| | | | JP | 2012073942 A | 12-04-2012 |
| | | | US | 2012076420 A1 | 29-03-2012 |
| US 2018128714 | A1 | 10-05-2018 | CN | 110140040 A | 16-08-2019 |
| | | | EP | 3538863 A1 | 18-09-2019 |
| | | | JP | 7059295 B2 | 25-04-2022 |
| | | | JP | 2020502540 A | 23-01-2020 |
| | | | US | 2018128714 A1 | 10-05-2018 |
| | | | US | 2020217759 A1 | 09-07-2020 |
| | | | WO | 2018087155 A1 | 17-05-2018 |
| EP 0977151 | A2 | 02-02-2000 | DE | 69937476 T2 | 28-08-2008 |
| | | | EP | 0977151 A2 | 02-02-2000 |
| | | | US | 6674902 B1 | 06-01-2004 |
| | | | US | 2004086184 A1 | 06-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020131070 A
- US 2021065085 W
- WO 2020131072 A
- WO 2020132394 A
- WO 2020254250 A1